# EUROPEAN PATENT APPLICATION

(11) **EP 3 435 144 A1**
(43) Date of publication of application: **30.01.2019**
(21) Application number: 17183410.4
(22) Date of filing: 26.07.2017
(51) Int. Cl.: G02C 7/02

(54) **HIGH-CURVE GLASS LENS, GLASSES AND METHOD FOR PRODUCING THEM**

(71) Applicant: SUN-RAY Corporation, Nishi-ku Osaka 550-0014 (JP)
(72) Inventor: MUNAKATA, Yoshikazu, Nishi-ku, Osaka 550-0014 (JP); MIYAZAKI, Hiroyuki, Nishi-ku, Osaka 550-0014 (JP)
(74) Representative: Reeve, Nicholas Edward

(57) **Abstract**

The present invention relates to a method for producing an unpowered lens (or an unpowered sunglasses lens), which is made of glass, and is suitable for eyeglass frame having so-called high-curve, which means that the angle of inclination at which the lens is set in the frame, is large.

An optical lens which is set in a frame having a large panoramic angle, in that a spherical degree of the optical lens is within a range of approximately -0.09 to approximately -0.03D, and the distance of an optical center in an optical lens is larger than a pupillary distance when the optical lens is set in a frame.

## Description

### BACKGROUND OF THE INVENTION

### 1. Field of the Invention

The present invention relates to a method for producing an unpowered lens (or an unpowered sunglasses lens), which is made of glass, and is suitable for eyeglass frame having so-called high-curve, which means that the angle of inclination at which the lens is set in the frame, is large.

### 2. Description of the Related Art

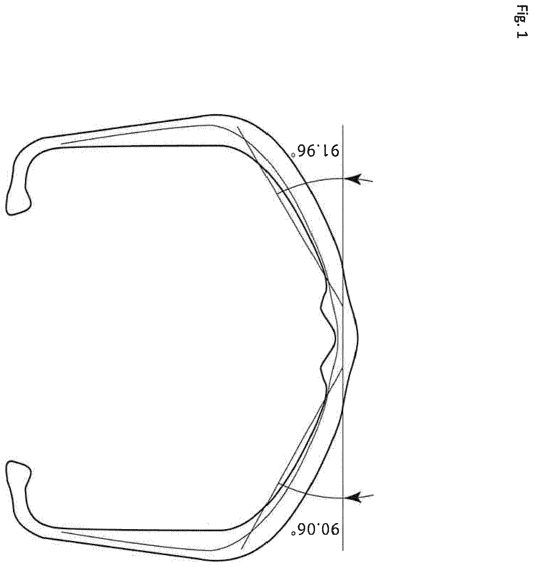

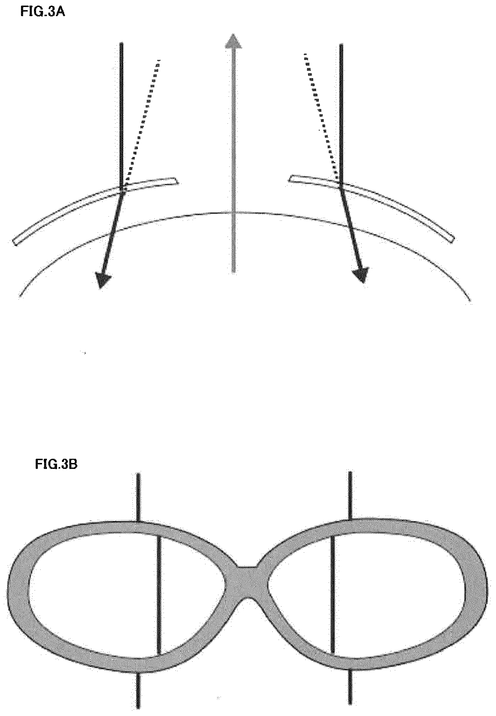

A high-curve sunglass is excellent in its fashionable appeal. However, since a lens suitable for a high-curve eyeglass frame (thereafter, it is referred as a high-curve lens) is set in the frame at an extremely large inclination as shown in Figure 1, the optical performance of such sunglasses has been known to be low, which causes some problems, such as the onset of headache if they are worn for a long period of time. Those phenomena are caused by the deviation of the optical axis, which is due to a generation of a pseudo prism function that result from the angle of inclination of the lens, and the refractive index specific to the lens material. Thus, in a case where common 8 curve lenses are set in a high curve frame, an image which is seen through the lenses will be out of focus as shown in Figure 3B unless the prismatic function is corrected.

De-centering technology is used to solve the above problems for the plastic lens as described in the following patent document. It attempts to dissolve the distortion of the optical axis by using a lens that has a prismatic function and of which both ends are different in thicknesses.

However, unlike a plastic lens, a de-centered glass lens cannot be prepared by using a mold unlike a plastic lens, as it can be prepared only by grinding and polishing a glass material. Such a method for preparing a decentered glass lens is not practical because the one end of the lens tend to be very thin, resulting in a very low yield. As described in the following patent document, the preparation of the de-centered glass lens was difficult unless a large special machine was used.

The present invention has achieved the dissolution of the deviation of the optical axis in an eyeglass lens in a manner similar to that of the de-centering method of a plastic lens, as a result of repeated experiments.

### SUMMARY OF THE INVENTION

The problems to be solved by the present invention.

The present invention, of the optical axis in a glass lens as similarly as the de-centering method of a plastic lens aim to solve the distortion, as a result of many various experiments.

The present invention has been made by way of considering the above disadvantages. What the present invention has achieved is to correct the distortion of the optical axis in the high curve lens in an easy and reliable way, in preparation of high-curve lenses that are accepted as unpowered lens in the leading countries around the world. A unpowered lens is defined as a lens not only as a lens without corrective function of visual acuity but also a lens which may have very slight corrective function even thought is cannot be considered as a visual correction lens.

The means for solving the problems

The glass lens in the present invention created for solving the problems described above, manufactured in cush a way that the distance of the optical center in a lens is larger than the pupillary distance when the said lens is set in a frame.

The optical lens of the present invention is set in a frame with a wide panoramic angle and can be summarized in that a spherical degree of the optical lens is set within a range of approximately -0.09 to approximately -0.03D, and the assistance of optical center of the lens is larger than the pupil distance when the optical lens is set in a frame.

The optical lens of the present invention is set in a frame with a wide panoramic angle and can be summarized in that the panoramic angle of the optical lens is approximately 12 degrees to 25 degrees, the refractive index of the optical lens is approximately 1.523 to 1.56, the thickness of the optical lens in the direction of the optical axis is 1.7 mm or less, and the said optical lens is made of glass.

The optical lens described of the present invention can be summarized to have an optical lens that has a polarizing function. In addition, a pair of glasses described in the present invention is summarized in that the optical lens of the present invention is used.

The method for producing the optical lens described in the present invention is for producing an optical lens which can be set in a frame that has wide panoramic angle and is summarized as a method comprising of: adjusting the optical lens that has a spherical degree within an approximately range of -0.09 to -0.03D; grinding the optical lens in a state that the optical center and the geometrical center of the lens are located at the same position; and cutting the optical lens so that the optical center distance in the optical lens is larger than the pupil distance when the optical lens is set in the frame.

The method for producing the optical lens described in the present invention is a method for producing the optical lens which can be set in a frame that has wide panoramic angle and is summarized as a method further comprising the step of: forming an unpowered lens made of glass and having a panoramic angle of approximately 12 degrees to 25 degrees, a refractive index of approximately 1.523 to 1.56, having a thickness of 1.7mm or less at the optical center in the direction of the optical axis.

The method for producing a pair of high-curve glasses described in the present invention is a method for producing a pair of high-curve glasses with a frame that has wide panoramic angle and summarized as a method comprising the step of setting the optical lens produced by the method of the present invention in a eyeglass frame so that the optical center distance of the said lens is larger than the pupil distance when it is set in a frame.

The present invention provides the method of producing the most excellent glass lens made of a glass material used with the high-curve eyeglasses by adjusting the optical factor.

Specifically, the optimum method of producing the optical lens is considered to essentially meet the following five conditions.

It is essential that the glass lens has a refractive index of not less than 1.523 and not more than 1.56. This is because a refractive index of common glass is 1.523 and glass with a refractive index of not more than 1.523 causes no distortion of the optical axis, and therefore, it does not have to be corrected to dissolve the said distortion. If the refractive index is more than 1.56, excessive labor and optical factor adjustment become necessary, which makes its use unrealistic.

It is essential that the panoramic angle of the eyeglasses frame, that is the angle of inclination of a lens, be not less than 12 degrees and not more than 25 degrees. It is so because if the angle is not less than 25 degrees, the distortion of the optical axis becomes so large that it is exceeds the range where such correction is possible, and if the angle is not more than 12 degrees, necessity of the correction is reduced.

Also, it is essential that the eyeglass lens be so adjusted that the optical center of the lens is positioned above the region between the eye pupil and the ear when a person wearing the glasses is facing the front. If the optical center is positioned between the eye pupil of and the nose, but not on the pupil, the lens is de-centered, and therefore not necessary to be corrected.

Further, it is essential that the thickness of the lens be set at not more than 1.7 mm. If the thickness is not less than 1.7 mm, the light becomes too much to be corrected so that an unpowered lens cannot be prepared.

Further, it is essential that the spherical degree of the lens be set at not more than -0.03D and not less than - 0.09D. If the degree is more than -0.03D, the effect of a concave meniscus will not appear. In particular, if the degree is positive, the lens will have a shape of convex meniscus and the correction becomes impossible: not only that, even an opposite effect appears. If the degree is not more than -0.09D, the lens does not meet the standard for the unpowered lens.

It is needless to say that a polarizing function obtained by laminating a polarizing film into the above glass lens, by a vapor deposition on the lens, or the like, can be applied to the lens described in the present invention. Thus, another point of the present invention is that an unpowered sunglasses lens made from glass, which can be set in a high-curve frame, and has a polarizing function, can be provided by the above method.

Also, the eyeglass should be so prepared that the glass lens described in the present invention is set into an eyeglass frame that has a panoramic angle of not less than 12 degrees and not more than 25 degrees and the optical center of the high-curve lens is positioned above the region between the eye pupil and the ear when a person wearing the eyeglasses facing the front. In such eyeglasses, the distortion of the optical axis will not occur even though they use glass lenses.

### 3. The intended effect of the lens made from glass material

As described above, the thickness of the de-centered lens is not uniformed at the edges, and the optical center of the lens is not found at its geometric center. The high-curve glass lens described in the present invention, lens for high-curve frame is so designed that the optical center is not located at the nasal side from the eye, but on the temporal side when a person is wearing eyeglass fitted with the lens, unlike the conventional de-centered lens. Accordingly, complex techniques such as grinding technique for preparing the conventional de-centered glass lens is not needed. A high-curve lens made from glass can be prepared simple and sure way by using conventional grinding techniques in a glass which meets the above conditions.

Also, since the polarized lens sunglass described in the present invention provides the high-curve lens with a polarizing function, it can be used as a sunglasses lens which can be fitted to a high curve frame.

### BRIEF DESCRIPTION OF THE DRAWINGS

Figure 1 illustrates an eyeglass frame having a wide panorama angle (angle of inclination of the lens), which is one embodiment of the present invention.

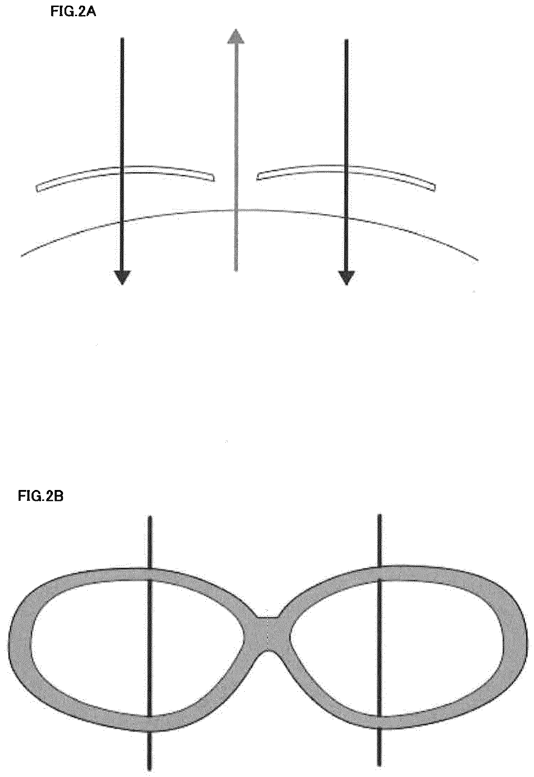

Figure 2A illustrates the arrangement of a common 8 base curve lens in an eyeglass frame without wide panoramic angle of the frame.
Figure 2B illustrates the image which is seen through a common 8 base curve lenses set in a glasses frame without wide panoramic angle of the frame.
Figure 3A illustrates the arrangement of a common 8 base curve lenses set in a glasses frame with wide panoramic angle of the frame and light distortion in an improper direction.
Figure 3B illustrates the image seen through a common 8 base curve lenses set in a eyeglass frame with wide panoramic angle of the frame.
Figure 4 illustrates the distortion of light with wide panoramic angle of the frame.
Figure 5 illustrates a de-centered lens and a common lens.
Figure 6 illustrates the correction of light refraction in a plastic lens by the de-centering method.
Figure 7 illustrates the distortion of light in a thin glass lens.
Figure 8 illustrates the improved property of the distortion of light shown in Figure 7.
Figure 9 illustrates a conventional eyeglass frame.

### DESCRIPTION OF EMBODIMENTS

The embodiment of the present invention is described below using drawings.

A conventional eyeglasses frame provides two lenses with no inclination, unlike a frame shown in Figure 1. A frame with curve as shown in Figure 1 is called a high curve frame and the lens which is used for this type of frame is called a high curve lens.

Since eye rim of the frame for holding the lenses are highly inclined, the pair of lenses set in those rims are also inclined along with the eye rim.

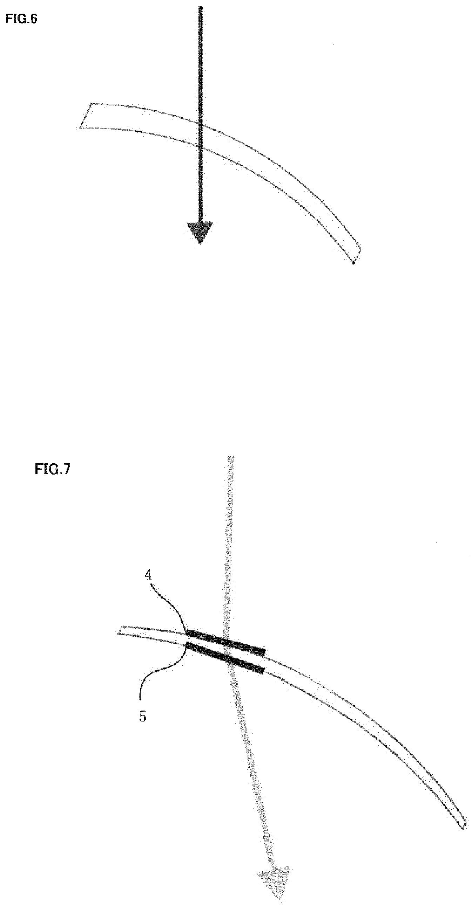

When a plastic lens is used for the high curve frame, as shown in Figure 6, the optical correction is achieved by thickening a nasal side, and thinning an temporal side of the lens..

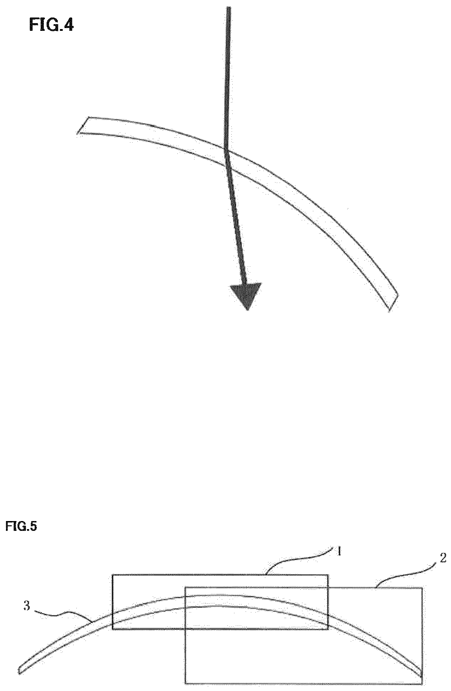

The above method is called De-centering method. As shown in Figure 5, the optically corrected lens is made so that its optical center, i.e., the lens center (1) is not placed on a geometric center of the lens (2), which is why the method is called the de-centering method. Lens (3) is an unpowered lens. If plastic is used as the material, the unpowered lens (Piano lens) can be prepared with relative ease by the de-centering method because melted plastic can be poured into a mold so as to establish the desired form.
In contrast, in the case of a glass lens, such curved lens has to be made by grinding or polishing the glass. The Rx power is unstable at the thin part while grinding, or the thin part can break or the other problems occurred. These problems elevates the result in an extremely low yield, and adding even more to the cost.

An extensive research had been performed so as to find a way for correcting the optical axis without de-centering method, and, the present invention has been achieved as a result. It was found that the correction of the optical axis can be achieved by using an unpowered glass lens if the lens meets some specific conditions.

At first, glasses were used in he experiment, in which the glass lenses have a refractive index of not less than 1.523 and not more than 1.56, a panoramic angle of the frame, that is, the degree of inclination of the lens, is not less than 12 degrees and not more than 25 degrees, and optical center of the lens is adjusted to be located above the region between the eye pupil and the ear when the person wearing the eyeglass is facing the front. The result of the experiment is that the axis of light (a light beam) was distorted (shifted) in an optically undesired direction (to the right) due to the inclination angle of the lens as shown in Figure 4. Thus, since the amount of distortion can be reduced by thinning the lens as much as possible, an unpowered lens (Plano lens) that has a thickness of not more than 1.7mm was used. However, the axis of light was still distorted to the right as shown in Figure 7.

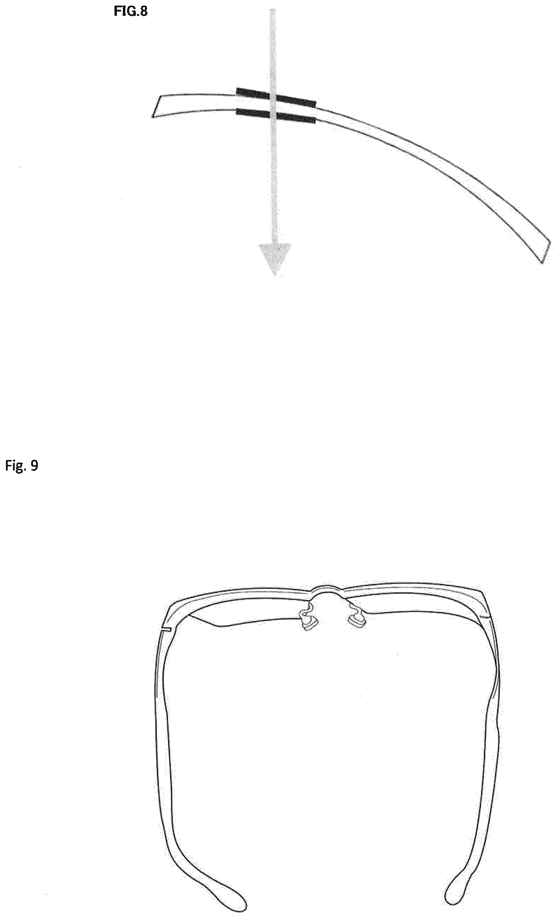

That is caused because the distance between the lens surface 4 shown in Figure 7, into which the light enters, and the opposite lens surface 5 is larger at the right side and smaller at the left, and the light bends to the direction of the thicker side. It was, therefore, considered that the axis of light might be corrected if the concave surface was adopted in the glass lens for the high-curve frame as shown in Figure 8, and after repeated experiments based on the above idea. It was finally successful in correcting the axis of light.

Optical axis of the lens having a spherical degree of not more than -0.03D and not less than -0.09D could be corrected. If the lens has a spherical degree of not less than -0.03D, the effect of a concave meniscus shape can not be achieved. In particular, if the spherical degree is a positive power for the lens, such lens has a convex meniscus shape, which makes it impossible to correct the axis. In the other word, the light distortion. If a spherical degree is not more than -0.09D, the lens does not meet the standard of unpowered lens and so, it cannot be used.

The lens described in the present invention may integrate with a polarizing film by vapor deposition and the like method. Also, sunglass lens having the polarizing film laminated into the lens is also considered. As a result, a sunglasses lens, that has a polarizing function and fits into a frame that has a wide panoramic angle, can be prepared.

Various types of polarizing films can be used for the lens described in the present invention as long as they are commonly used as a polarizing film.

For example, PVA (poly-vinyl alcohol) and PET (poly-ethylene terephthalate) are considered to be such a polarizing film.

In addition, various function, including filtering ultraviolet light, giving a color enhancing effect and the like are integrated to the lens by vapor deposition to form a film on the glass surface (4) or the surface opposite to it (5).

Though the above embodiments are defined with the execution and advantages as described, the present invention is not limited to those embodiments, and can be modified within the range of the spirit of the present invention.

It is also possible to add another layer between the polarizing film and the lens. Specifically, a polarizing film, a preventing layer for ultraviolet light, including an ultraviolet absorbing layer can be laminated in the lens in that order from the eye side. In addition, a protective layer or a layer for filtering the ultraviolet light can be included outside the polarizing film.

### Comparative examples 1-3

Comparative examples 1-3 show supposed results (a distortion of the optical axis) when any one of conditions 1-5 is not met.
Condition 1: the refractive index is not less than 1.523, and not more than 1.56.
Condition 2: the angle of inclination of the lens is not less than 12 degrees and not more than 25 degrees.
Condition 3: the optical center of a lens is located above the region between the eye pupil and the ear when the person wearing the eyeglasses is facing the front (the optical center distance of the lens is larger than the pupillary distance).
Condition 4: the thickness of the lens is not more than 1.7 mm.
Condition 5: the spherical degree of the lens is not more than -0.03D and not less than -0.09D.

Note that the test result is measured by using Prism Check II manufactured by Intercast Europe S.P.A. (Italy).

**[Table 1]**

| The following are the results when any one of conditions 1-5 is not met distortion of the optical axis. | | | | | | |
|---|---|---|---|---|---|---|
| ○: a condition is met. ×: a condition is not met. | | | | | | |
| | Condition 1 | Condition 2 | Condition 3 | Condition 4 | Condition 5 | Results (distortion of optical axis) |
| Comparative experiment 1 | × 1.58 | ○ | ○ | ○ | ○ | × |
| Comparative experiment 2 | ○ | × 27 degrees | ○ | ○ | ○ | × |
| Comparative experiment 3 | ○ | ○ | × | ○ | ○ | × |
| Comparative experiment 4 | ○ | ○ | ○ | × 1.9 mm | ○ | × |
| Comparative experiment 5 | ○ | ○ | ○ | ○ | × 0.01D | - |

### Comparative experiments 1

As shown in the above table 1, if the refractive index of an optical lens is 1.58, distortion of the optical axis in eyeglasses is greater than the standard, which does not attain the purpose of the present invention.

### Comparative experiments 2

As shown in the above table 1, if the angle of inclination of the lens is 27 degrees, distortion of the optical axis in the eyeglasses is greater than the standard, and does not attain the purpose of the present invention, which is to resolve a distortion of the optical axis in an unpowered (Piano) glass lens.

### Comparative experiments 3

As shown in the above table 1, if the optical center is not located on the nasal side but on the temporal side when the person wears eyeglasses, the distortion of an optical axis in the eyeglasses is greater than the standard, and thus does not attain the purpose of the present invention.

### Comparative experiment 4

As shown in the above table 1, if the thickness of a lens is 1.9mm, the distortion of an optical axis in eyeglasses is greater than the standard, and thus does not attain the purpose of the present invention.

### Comparative experiment 5

As shown in the above table 1, if the spherical degree is 0.01D, the distortion of the optical axis in eyeglasses is greater than the standard, and thus does not attain the purpose of the present invention.

The high-curve lens described in the present invention unlike the conventional high-curve lens, does not cause the distortion of sight and can thus prevent headache, and can be fit to a frame with wide panoramic angle because the panoramic lens, by its configuration can correct the optical axis. Therefore, it can be used advantageously for an unpowered sunglass lens made from glass material without compromising the optical quality The present invention has made possible for the first time to use a glass lens for high curve sunglasses, which is excellent in fashionable appeal.

## Claims

1. An optical lens which is set in a frame having a large panoramic angle, **characterized in that**
a spherical degree of the optical lens is within a range of approximately -0.09 to approximately -0.03D, and
the distance of an optical center in an optical lens is larger than a pupillary distance when the optical lens is set in a frame.

2. The optical lens according to claim 1 or 2, **characterized in that**
a panoramic angle of the optical lens is approximately 12 degrees to approximately 25 degrees,
a refractive index of the optical lens is approximately 1.523 to approximately 1.56,
a thickness of the optical lens in a direction of an optical is 1.7 mm or less,
the optical lens is made of glass.

3. The optical lens according to claim 1 or 2, **characterized in that**
the optical lens has a polarizing function.

4. A pair of eyeglasses using the optical lens according to any one of claims 1 to 3.

5. A method for producing an optical lens which can be set in a frame having a large panoramic angle, the method comprising of:
adjusting the optical lens having a spherical degree within a range of approximately -0.09 to approximately -0.03D;
grinding the optical lens in a state that an optical center and a geometrical center of the lens are located at the same position; and
grazing the optical lens so that the distance of optical center in the optical lens is larger than a pupillary distance when the optical lens is set in the frame.

6. The method for producing the optical lens which can be set in the frame having the large panoramic angle according to claim 5, the method further comprising the step of:
forming an unpowered lens made of glass and having a panoramic angle of approximately 12 degrees to approximately 25 degrees, a refractive index of approximately 1.523 to approximately 1.56, having a thickness of 1.7mm or less at the optical center in the direction of optical axis.

7. A method for producing a pair of glasses, the method comprising the step of:
setting the optical lens produced by the method according to claim 5 or 6 in an eyeglass frame so that the distance of the optical center in optical lens is larger than the pupil distance when the optical lens is set in the frame.
